Europäisches Patentamt

European Patent Office

Office européen des brevets

(19)

(11) **EP 0 911 360 A1**

(12) **EUROPEAN PATENT APPLICATION**

(43) Date of publication:
28.04.1999 Bulletin 1999/17

(51) Int. Cl.⁶: **C08K 3/40**, C08J 3/20

(21) Application number: 98203450.6

(22) Date of filing: 13.10.1998

(84) Designated Contracting States:
AT BE CH CY DE DK ES FI FR GB GR IE IT LI LU
MC NL PT SE
Designated Extension States:
AL LT LV MK RO SI

(30) Priority: 23.10.1997 US 956328

(71) Applicant: EASTMAN KODAK COMPANY
Rochester, New York 14650 (US)

(72) Inventor:
Richards, David Anthony,
Eastman Kodak Company
Rochester, New York 14650-2201 (US)

(74) Representative:
Nunney, Ronald Frederick Adolphe et al
Kodak Limited,
Patents, W92-3A,
Headstone Drive
Harrow, Middlesex HA1 4TY (GB)

(54) **Glass-filled clear plastic for fabrication of optical lenses by injection molding**

(57)    A method for making a composite plastic/glass optical element which is resistant to change resulting from variations in temperature and humidity. The method is practiced by selecting an optical plastic and an optical glass which have substantially the same refractive index as well as the same absorption and dispersion characteristics. Once selected, the two materials are mixed such as, for example, dry mixing glass pellets with plastic pellets. The mix is then heated to the melting point of the optical plastic. However, the glass pellets do not deform at this relatively low temperature. With the melted plastic wetting of the smooth glass surfaces of the glass pellets, the mixture is used in a typical injection molding operation to mold glass-filled clear plastic optical elements. The index of refraction of the glass and plastic and/or the dispersion and absorption characteristics of the glass and plastic may be intentionally slightly mismatched depending on the ultimate purpose of the optical element to be formed therewith.

FIG. 1

EP 0 911 360 A1

## Description

### FIELD OF THE INVENTION

The present invention is generally directed to optical elements made from injection molding clear plastic and, more particularly, to glass filled plastic optical elements produced by injection molding.

### BACKGROUND OF THE INVENTION

Optical elements produced from clear plastic such as PMMA, polystyrene and polycarbonate have been typically produced by injection molding. These plastic optical elements have always suffered in comparison to glass optics because of their susceptibility to change due to temperature and humidity variations. As a result, glass is the preferred medium for use in producing optical elements which are to be used in hostile environments. However, glass is more expensive in both material costs and fabrication requirements even when the glass optical elements are produced by compression molding as opposed to grinding and polishing.

Providing plastics, particularly thermoplastics, with fiber reinforcement is well known in the art of producing composite materials from which structural elements are made. These composite materials are typically opaque. One example of such a composite material process for producing that material is taught in U.S. Patent 5,595,696 to Schlarb et al. Schlarb et al teaches the production of fiber-reinforced pellets, in particular, reinforced with chopped glass fibers, by incorporating fibers into the thermoplastic melt for extrusion.

U.S. Patent 4,388,422 to Gerteisen et al teaches a composite plastic material having improved shielding against electromagnetic interference. The material is produced by injection molding a reinforced thermoplastic resin composition by incorporating into the thermoplastic resin matrix metallized glass fibers and carbon fibers.

U.S. Patent 4,323,623 to Ahrens et al teaches the fabrication of a strong composite plastic structure. This structure comprises a composite plastic or core sandwich structure where the core material is a thermosetting resin matrix such as an epoxy resin containing glass microballoons and adjacent outer layers of fibrous material impregnated with a thermosetting resin matrix, preferably an epoxy resin.

U.S. Patent 4,022,855 to Hamblen teaches a method for making a plastic optical element having a gradient index of refraction. The method involves the combination of two copolymerizable monomer compositions having different indices of refraction.

Nothing in the prior art teaches the production of an optical material from a composite of glass and plastic. Further, the prior art fails to suggest the injection molding of composite glass/plastic material to produce optical elements as economically as injection molding plastic optics while overcoming the problems associated with plastic optics as mentioned above.

### SUMMARY OF THE INVENTION

It is, therefore, an object of the present invention to provide a composite glass-filled clear plastic material suitable for injection molding optical elements.

It is a further object of the present invention to provide a method for injection molding glass-filled clear plastic optics.

Yet another object of the present invention is to provide a method for stabilizing plastic optical elements from change due to temperature and humidity variations.

Briefly stated, these and numerous other features, objects and advantages of the present invention will become readily apparent upon a reading of the detailed description, claims and drawings set forth herein. These features, objects and advantages are accomplished by selecting an optical plastic and an optical glass which have substantially the same refractive index as well as the same absorption and dispersion characteristics. Once selected, the two materials are mixed such as, for example, dry mixing glass pellets with plastic pellets. The mix is then heated to the melting point of the optical plastic. However, the glass pellets do not deform at this relatively low temperature. With the melted plastic wetting of the smooth glass surfaces of the glass pellets, the mixture is used in a typical injection molding operation to mold glass-filled clear plastic optical elements.

### BRIEF DESCRIPTION OF THE DRAWINGS

Figure 1 schematically depicts the steps of the method of the present invention for producing a glass-filled clear plastic an injection molding optical lenses therewith.

Figure 2A is a graph showing the relationship of ionic radius to the molecular refraction and molecular volume of various elements.

Figure 2B is a graph showing the relationship of ionic radius to the molecular refraction and molecular volume of the elements of Group IIIa of the Periodic Table.

Figure 2C is a graph showing the relationship of ionic radius to the molecular refraction and molecular volume of the elements of Group IVa of the Periodic Table.

Figure 2D is a graph showing the relationship of ionic radius to the molecular refraction and molecular volume of the elements of Group Va of the Periodic Table.

Figure 2E is a graph showing the relationship of ionic radius to the molecular refraction and molecular volume of the elements of Group VIa of the Periodic Table.

Figure 3 is a graph plotting absorption and dispersion versus wavelength in glass.

## DETAILED DESCRIPTION OF THE INVENTION

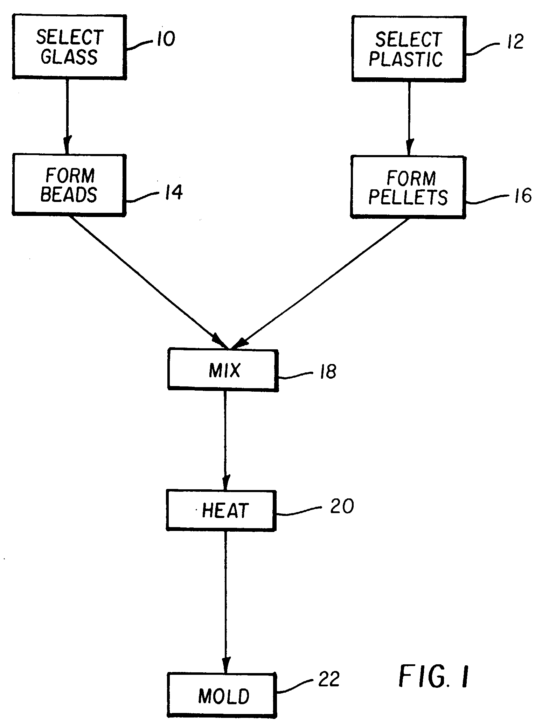

Looking at Figure 1, there is shown schematically the steps to be practiced in the method of the present invention for injection molding optical elements using a glass-filled clear plastic. Critical to the practice of the method of the present invention are the steps of selecting an optical glass as indicated by function box 10 and selecting an optical plastic indicated by function box 12. The selections should be made such that the optical glass and optical plastic have substantially the same index of refraction and the same absorption and dispersion characteristics. Typically, the optical plastic will be selected first and an optical glass will then be selected which has an index of refraction which substantially matches that of the optical plastic. It may be that there is no off the shelf optical glass available which has the desired index of refraction. However, the refractive index and dispersion and absorption characteristics of glass are readily modifiable by those skilled in the art of making glass. These characteristics of the glass are modifiable by altering the composition of the glass.

It is known that the index of refraction is given by the equation:

$$n\text{-}1 = \frac{R}{V} \qquad (1)$$

where n is the index of refraction, V is the molecular volume number and R is called the molecular refraction. The variable R is a quantity that is peculiar to the substance involved and is independent of the temperature, pressure, or state of aggregation. The index of refraction increases with an increase in molecular refraction and with a decrease in molecular volume. The index of refraction may be increased by either increasing the polarizability of the $O^{2-}$ ions, or by increasing the number of oxygen ions per unit volume.

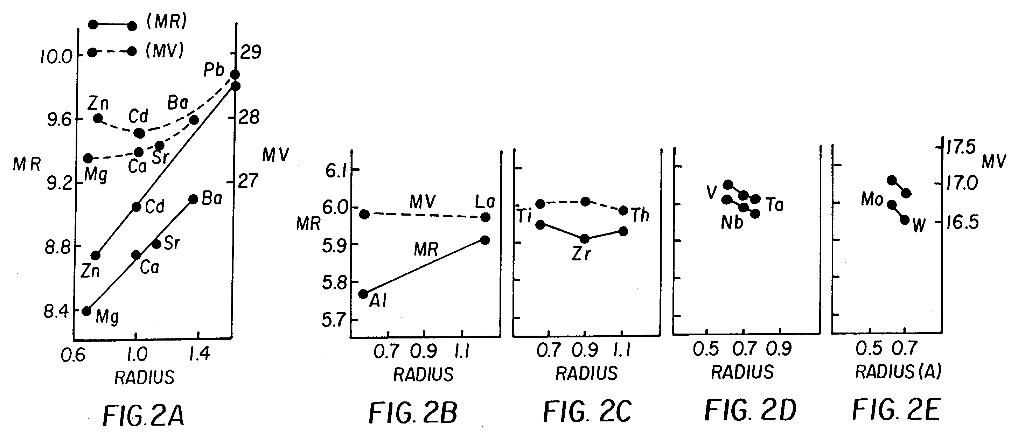

Figures 2A-E (taken from "Optical Glass" by T. Izumitani) show the relationship of the ionic radius to the molecular refraction and molecular volume in various groups of the periodic table. As depicted in Figures 2A-E and as discussed in "Optical Glass", the molecular refraction and molecular volume both increase with an increase in ionic radius in the case of divalent and trivalent ions. The index of refraction also increases. Therefore, with glasses containing low-valence ions, the index of refraction is determined by the polarizability of the oxygen ions. For glasses containing high-valence ions, that is ions, tetravalent, or higher ions, both the molecular refraction and the molecular volume decrease with an increase in ionic radius and the index of refraction increases. Therefore, with such high valence ion containing glasses the index of refraction is determined by the degree of packing of $O^{2-}$ ions. In other words, the polarizing effect of the action governs the index of refraction in glasses containing low-valence ions, whereas the coordination number of the action determines the index of refraction in glasses containing high-valence ions.

The index of refraction changes with the wavelength of light. This results in dispersion. The relationship between the index of refraction and the frequency of light is given, for example, by the Drude-Voigt dispersion equation:

$$n\text{-}1 = \frac{N_1 e^2}{2\pi m} \Sigma \frac{f_i}{v_{oi}^2 - v^2} \qquad (2)$$

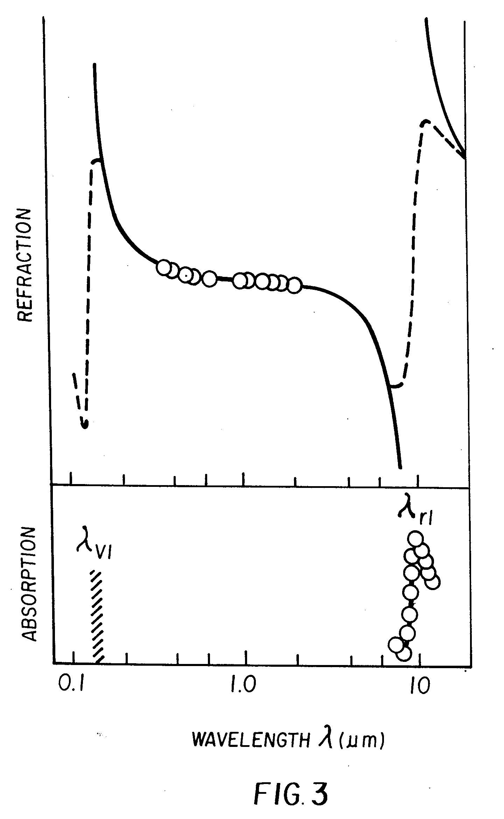

where $N_1$ is the number of oxygen ions per unit volume, $e$ and $m$ are the charge and mass of an electron, $v_{oi}$ is the characteristic frequency of absorption of the oxygen ion, $f_i$ is the oscillator strength, and v is the frequency of the light. As shown in Figure 3 (also taken from "Optical Glass by T. Izumitani), there are ordinarily two or three ultraviolet absorptions and one infrared absorption. As stated by Izumitani, in the vicinity of wavelengths where an absorption occurs, the index of refraction increases abruptly as indicated by the above stated equation and then gradually decreases as the wavelength becomes longer. From Equation 2 above, the index of refraction $n_d$, mean dispersion $n_f$-$n_c$, and Abbe number can be expressed as follows:

$$n_d\text{-}1 = \frac{N_1 e^2}{2\pi m} \Sigma \frac{f}{v_o^2 - v_d^2} \qquad (3)$$

$$n_f\text{-}n_c = \frac{N_1 e^2}{2\pi m} (v_f^2 - v_c^2) \Sigma \frac{f}{(v_o^2 - v_f^2)(v_o^2 - v_c^2)} \qquad (4)$$

$$(5)$$

$$\text{Abbe number} = \frac{n_d\text{-}1}{n_f\text{-}n_c} = \frac{(v_o^2 - v_f^2)(v_o^2 - v_c^2)}{(v_f^2 - v_c^2)(v_o^2 - v_d^2)}$$

Again, as stated by Izumitani, both the index of refraction and the mean dispersion are functions of $N_1$, f, and $v_0$. However, the mean dispersion $n_f$-$n_c$ has two terms involving the $v_o^2$ in the denominator and is more strongly influenced by ultraviolet absorption wavelengths. In other words, whereas the index of fraction is a function of degree of packing, oscillator strength, and absorption wavelength, dispersion may be thought of as being determined mainly by absorption wavelength. Furthermore, dispersion will be expected to increase as ultraviolet absorption occurs at longer wavelengths. Additionally, it is seen that as an approximation the Abbe number is a function of ultraviolet absorption wavelength alone, and the Abbe number increases with increasing $v_0$.

From the foregoing, it should be clear that once an optical plastic has been selected, the desired characteristics for an optical glass can be provided to one skilled in the art of making glass such as a large commercial supplier of glasses, and that person skilled in the art of making glasses can produce an optical glass with a composition which will yield the desired index of refraction, absorption and dispersion characteristics.

The selected glass is preferably formed into beads as indicated by function box 14 and, most preferably, microbeads which are substantially spherical and have a diameter not greater than one millimeter. The optical plastic is preferably formed into pellets as indicated by function box 16. The plastic pellets and glass microbeads are then mixed as indicated by function box 18. Preferably, glass microbeads form in the range of from about 10% to about 50% by volume of the mixture. The mixture of glass microbeads and plastic pellets is then heated to a temperature sufficient to melt the plastic pellets (typically about 100°C) as indicated by function box 20. This results in a slurry of glass microbeads in melted plastic. The slurry is then molded (as indicated by function box 22) to the desired shape of the optical element. Molding is preferably accomplished by injection molding in this manner as an all plastic optical element is injection molded.

By way of example, it is noted that Schott SK-5 optical glass has almost exactly the same index of refraction as polystyrene optical plastic at the HeNe wavelength (6328Å). An experiment was performed to embed small lumps of SK-5 glass into a melt of polystyrene optical plastic. This was accomplished by dry mixing the glass pellets with the plastic pellets intended for plastic injection molding. The mix was placed in a glass pan and heated in a furnace to fuse the plastic at approximately 100°C. The glass, of course, does not deform at this relatively low temperature. However, the plastic did wet the smooth glass surfaces and hid the glass interface to the plastic surrounding medium. Except for the difference is dispersion, the embedded glass was difficult to discern. Questions of stress and birefringence remained. However, it is believed that these can be greatly reduced by introducing the glass as microbeads. The test glass pellets of SK-5 glass were relatively large and in the shape of oblate spheroids of approximately 10 mm maximum diameter. It would be necessary to reduce this size to something less than a one millimeter diameter sphere to allow the mixture of glass microbeads and melted plastic to be injection molded as well as to reduce stress and birefringence. The glass microbeads are preferably heat treated for surface preparation. The outgassing and water removal accomplished by heat treating will minimize aging effects. This could be accomplished in the fabrication of the glass-filled pellets which is not unlike the current manufacturing processes for glass-filled opaque plastic pellets. It would also be desirable to further improve the matching of the optical characteristics of the glass to the plastic (or the plastic to the glass) to improve the application of this technology to broadband applications. As stated above, this should be a relatively simple matter for those skilled in the art of making glass. Optical elements produced by injection molding glass-filled clear plastic should provide substantial benefits over optical elements produced by injection molding 100% clear plastic. That is, glass-filled clear plastic optical elements should be stronger and less susceptible to temperature and humidity variations.

It should also be appreciated that there may be occasion where it is desired to slightly mismatch the index of refraction and/or dispersion characteristics of the clear plastic resin and the glass microbeads. For example, it may be desirable to produce an optical element which acts as a diffuser. This can be accomplished by slightly mismatching the index of refraction and/or dispersion characteristics of the clear plastic resin and the glass microbeads. A "slight" mismatch in the index of refraction would be a $\Delta N$ in the second decimal place. For example, indexes of refraction of 1.5712 and 1.5925 would be "slightly" mismatched. This mismatch can be tailored to produce a diffusing material with desired light scattering properties. Mismatching can also be used for defining blur filters for anti-aliasing applications.

There are basically three ways to obtain a refractive index match and a dispersion match between the plastic medium and the glass inclusions. The first way, as discussed above, is to develop a glass which has a refractive index and dispersion characteristic which matches those of an existing optical plastic material. The second way is to develop an optical plastic that has a refractive index and dispersion characteristic which matches that of an existing optical glass. The third way is to change the refractive index and the dispersion characteristics of both an existing optical glass and an existing optical plastic to thereby achieve a match therebetween. It is known from the prior art (Optical Glass by T. Izumitani) what the requirements are for formulating glasses at different optical coordinates (refractive index and dispersion). This, of course, becomes a simpler matter if only a refractive index match is necessary for monochromatic applications.

An alternative method for practicing the present invention would be to first select the optical glass. An optical plastic can then be selected which has the desired refractive index, as well as the same absorption and dispersion characteristics. If an off-the-shelf optical plastic is not available which has a matching refractive index as well as the same absorption and dispersion characteristics, it would be possible for those skilled in the art of manufacturing optical plastics to reformulate the optical plastic to obtain the desired properties. Through the blending of the polymers used to create the optical plastic, some variation in the refractive index and the absorption and dispersion characteristics can be achieved. However, it would appear that tailoring the glass is more feasible than tailoring the plastic to accomplish larger changes in the index of refraction. This is evidenced by the large number of optical glasses that are commercially available as compared to the relatively few commercially available optical plastics.

It should also be apparent that with the method of the present invention can be practiced where the formulations of both the optical glass and the optical plastic can be varied to achieve matching characteristics. In other words, an off-the-shelf optical glass can be selected having a first refractive index A and an off-the-shelf optical plastic can be selected having a second refractive index B. Rather than varying the formulation of the optical glass to achieve an optical glass having a refractive index B to match that of the optical plastic, and rather than varying the formulation of the optical plastic to achieve a new optical plastic having a refractive index A to match that of the optical glass, both the formulations of the optical glass and the optical plastic can be varied to achieve matching refractive indexes which are not refractive index A or B. Preferably, gross variations would be made in the refractive index of the glass to approximate the index of the plastic. Then a minor variation of the refractive index of the plastic could be made to fine tune the match.

Although in the preferred method for practicing the present invention as described herein, the glass microbeads and plastic are first mixed in solid form prior to melting the plastic, the method can also be practiced by melting the plastic and then adding the microbeads to the plastic melts to form the slurry.

From the foregoing, it will be seen that this invention is one well adapted to attain all of the ends and objects hereinabove set forth together with other advantages which are apparent and which are inherent to the process.

It will be understood that certain features and subcombinations are of utility and may be employed with reference to other features and subcombinations. This is contemplated by and is within the scope of the claims.

As many possible embodiments may be made of the invention without departing from the scope thereof, it is to be understood that all matter herein set forth and shown in the accompanying drawings is to be interpreted as illustrative and not in a limiting sense.

## Claims

1. A method for making an optical element comprising the steps of:

   (a) selecting an optical plastic having a known index of refraction;
   (b) selecting an optical glass having an index of refraction which is substantially equal to the index of refraction of the optical plastic;
   (c) mixing the selected optical glass and the selected optical plastic together to form a mixture;
   (d) heating the mixture to melt the optical plastic to form a slurry; and
   (e) molding the slurry to form an optical element.

2. A method as recited in claim 1 further comprising the step of:

   forming the selected optical glass into microbeads prior to said mixing step.

3. A method as recited in claim 1 wherein:

   the optical glass selected also has dispersion and absorption characteristics which substantially match the dispersion and absorption characteristics of the selected optical plastic.

4. A method as recited in claim 1 wherein:

   said molding step is performed by injection molding.

5. A method for making an optical element comprising the steps of:

   (a) selecting an optical plastic having a known index of refraction;
   (b) selecting an optical glass having a known index of refraction;
   (c) mixing the selected optical glass and the selected optical plastic together to form a mixture;
   (d) heating the mixture to melt the optical plastic to form a slurry; and
   (e) molding the slurry to form an optical element.

6. A method as recited in claim 5 wherein:

   the index of refraction of the optical plastic substantially matches the index of refraction of the optical glass.

7. A method as recited in claim 5 wherein:

the index of refraction of the optical plastic slightly mismatches the index of refraction of the optical glass.

8. A molded optical element comprising:

(a) an integrally formed optical plastic mass having a known index of refraction;
(b) a plurality of optical glass components embedded in said integrally formed optical plastic mass, said plurality of optical glass components having a known index of refraction.

9. A molded optical element as recited in claim 8 wherein:

said known index of refraction of said integrally formed optical plastic mass is substantially equal to said known index of refraction of said plurality of optical glass components.

10. A molded optical element as recited in claim 8 wherein:

said known index of refraction of said integrally formed optical plastic mass is slightly mismatched to said known index of refraction of said plurality of optical glass components.

```
┌──────────┐                          ┌──────────┐
│  SELECT  │╲―10                      │  SELECT  │╲―12
│  GLASS   │                          │ PLASTIC  │
└──────────┘                          └──────────┘
     │                                     │
     ▼                                     ▼
┌──────────┐                          ┌──────────┐
│   FORM   │╲―14                      │   FORM   │╲―16
│  BEADS   │                          │ PELLETS  │
└──────────┘                          └──────────┘
      ╲                                  ╱
       ╲                                ╱
        ╲                              ╱
         ╲                            ╱
          ▼                          ▼
        ┌─────────────────────┐
        │        MIX          │╲―18
        └─────────────────────┘
                   │
                   ▼
        ┌─────────────────────┐
        │       HEAT          │―20
        └─────────────────────┘
                   │
                   ▼
        ┌─────────────────────┐
        │       MOLD          │╲―22        FIG. 1
        └─────────────────────┘
```

FIG.2A     FIG.2B     FIG. 2C     FIG. 2D     FIG. 2E

EP 0 911 360 A1

FIG. 3

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 567 655 A (IDEMITSU PETROCHEMICAL CO) 3 November 1993 <br> * page 11 * <br> * page 22; examples 1D-4D * <br> * claim 1 * | 1-10 | C08K3/40 <br> C08J3/20 |
| X | EP 0 138 528 A (CORNING GLASS WORKS) 24 April 1985 <br> * claims 1,5 * | 8-10 | |

**TECHNICAL FIELDS SEARCHED (Int.Cl.6)**

C08K

The present search report has been drawn up for all claims

| Place of search | Date of completion of the search | Examiner |
|---|---|---|
| THE HAGUE | 5 February 1999 | Siemens, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 98 20 3450

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-1999

| Patent document cited in search report | | Publication date | Patent family member(s) | | Publication date |
|---|---|---|---|---|---|
| EP 0567655 | A | 03-11-1993 | JP | 2619576 B | 11-06-1997 |
| | | | JP | 5140461 A | 08-06-1993 |
| | | | JP | 5140439 A | 08-06-1993 |
| | | | JP | 5140440 A | 08-06-1993 |
| | | | JP | 2613338 B | 28-05-1997 |
| | | | JP | 5179119 A | 20-07-1993 |
| | | | CA | 2098566 A | 16-05-1993 |
| | | | WO | 9310185 A | 27-05-1993 |
| | | | US | 5510414 A | 23-04-1996 |
| EP 0138528 | A | 24-04-1985 | AU | 572206 B | 05-05-1988 |
| | | | AU | 3424584 A | 26-04-1985 |
| | | | BR | 8405280 A | 27-08-1985 |
| | | | CA | 1259148 A | 05-09-1989 |
| | | | JP | 60108467 A | 13-06-1985 |
| | | | US | 4581288 A | 08-04-1986 |
| | | | US | 4622184 A | 11-11-1986 |

EPO FORM P0459

For more details about this annex : see Official Journal of the European Patent Office, No. 12/82